# EUROPÄISCHE PATENTSCHRIFT

(11) **EP 0 641 754 B1**
(45) Veröffentlichungstag und Bekanntmachung des Hinweises auf die Patenterteilung: **07.01.1998**
(21) Anmeldenummer: 94890142.6
(22) Anmeldetag: 05.09.1994
(51) Int. Cl.: C05F 17/02, B65D 6/16, F16B 5/00, F16B 2/18

(54) **Mehrteiliger Kompostsilo**
Multi part compost silo
Silo de compostage en plusieurs parties

(30) Priorität: 03.09.1993 AT 1779/93
(43) Veröffentlichungstag der Anmeldung: 08.03.1995
(73) Patentinhaber: Wüster, Heinrich, 6460 Imst (AT)
(72) Erfinder: Wüster, Heinrich, Ing., A-6460 Imst (AT)
(74) Vertreter: Berger, Erhard, Dr.

(56) Entgegenhaltungen:
- EP-A- 0 217 997
- EP-A- 0 301 340
- EP-A- 0 538 511
- FR-A- 771 450
- FR-A- 1 361 827
- GB-A- 805 787
- GB-A- 2 210 658
- US-A- 1 461 195
- US-A- 1 987 076
- US-A- 3 951 294

## Beschreibung

Die Erfindung bezieht sich auf mehrteilige Kompostsilos, die aus mehreren, vorzugsweise plattenförmigen Wandelementen zusammengesetzt sind, die an ihren aneinanderstoßenden Randbereichen mit Verbindungsflanschen versehen und mittels lösbarer Verbindungsvorrichtungen untereinander verbunden sind.

Bei der Montage solcher Kompostsilos werden die Wandelemente mit ihren Verbindungsflanschen aneinandergereiht, die lösbaren Verbindungsvorrichtungen in die dafür vorgesehenen zylindrischen bzw. rechteckigen Durchtrittsöffnungen der Verbindungsflansche eingesetzt und dort festgezogen. Bei Kompostsilos mit zylindrischen Durchtrittsöffnungen in den Verbindungsflanschen der Wandelemente werden Schraubvorrichtungen aus Metall verwendet, wobei jeweils mit einem die Durchtrittsöffnung überdeckenden Kopf versehene zylindrische Gewindebolzen durch die miteinander fluchtenden Durchtrittsöffnungen der Verbindungsflansche hindurchgesteckt und diese mittels der auf die Gewindebolzen aufzuschraubenden Flügelmuttern aneinandergedrückt werden. Bei Kompostsilos mit rechteckigen Durchtrittsöffnungen in den Verbindungsflanschen der Wandelemente werden zweiteilige Steckkeilverbindungen verwendet, wobei jeweils mit einem die Durchtrittsöffnung überdeckenden Kopf versehene vierkantige Haltebolzen durch die miteinander fluchtenden rechteckigen Durchtrittsöffnungen der Verbindungsflansche hindurchgesteckt und diese mittels der jeweils in einen Querschlitz eines Haltebolzens einzusetzenden Steckkeile aneinandergedrückt werden.

Solche Kompostsilos müssen für den Gebrauch aus ihren Einzelteilen zusammengesetzt und für die Entnahme des Kompostes ganz oder teilweise wieder zerlegt und für den nächsten Gebrauch wieder zusammengesetzt werden. Dieses mehrmalige Zusammensetzen und wieder Auseinandernehmen eines Kompostsilos ist bei mittels metallener Schraubenverbindungen verbundener Wandelemente sehr zeitaufwendig. Die Steckkeilverbindungen wiederum sind bei nicht exakt passenden Wandelementen sehr unhandlich und besitzen einen sehr eingeschränkten Verstellbereich. Beide Varianten der Verbindungsvorrichtungen sind wegen der während des Gebrauches des Kompostsilos auftretenden koorosiven Einflüsse und Verschmutzung nicht sehr betriebssicher. Darüberhinaus sind sie als mehrteilige Systeme ständig von dem Verlust wichtiger Teile bedroht, wodurch bei Verlust die Funktionsfähigkeit des ganzen Kompostsilos gefährdet ist.

Aufgabe der Erfindung ist es, einen Kompostsilo anzugeben, dessen Wandelemente auch nach längerem Gebrauch und mehrmaligem Zusammensetzen und Zerlegen des Kompostsilos noch einfach miteinander zu verbinden und von einander zu trennen sind.

Dies wird, ausgehend von einem mehrteiligen Kompostsilo der eingangs genannten Art erfindungsgemäß dadurch erreicht, daß die Verbindungsvorrichtungen als geschlitzte, einteilige und starre Klemmhülsen ausgebildet sind, daß jede starre Klemmhülse auf die aneinanderliegenden Verbindungsflansche zweier Wandelemente aufsetzbar ist und daß jede starre Klemmhülse durch Verdrehen um ihre Längsachse oder Verschieben entlang ihrer Längsachse mit beiden Verbindungsflanschen in einen formschlüssigen Eingriff bringbar und an beiden Verbindungsflanschen festklemmbar ist. Diese einteiligen, geschlitzten, starren Klemmhülsen werden auf die aneinanderliegenden, entsprechend ausgebildeten Verbindungsflansche zweier Wandelemente aufgeschoben bzw. in deren Durchtrittsöffnungen eingesetzt und zum Verbinden der Verbindungsflansche der beiden Wandelemente lediglich an den Verbindungsflanschen entlanggeschoben bzw. gegenüber diesen verdreht. Dadurch wird das Zusammensetzen und wieder Auseinandernehmen eines Kompostsilos vereinfacht und es benötigt gegenüber den Schraub- bzw. Steckkeilverbindungen viel weniger Zeit.

Gemäß einem weiteren Merkmal der Erfindung können in den aneinanderliegenden Verbindungsflanschen zweier Wandelemente Durchtrittsöffnungen für den Eingriff mit den starren Klemmhülsen vorgesehen sein, welche als paarweise aufeinander ausgerichtete, zum Rand des jeweiligen Wandelementes parallel verlaufende Schlitze ausgebildet sind, und die geschlitzten, starren Klemmhülsen können als, in einen der aufeinander ausgerichteten Schlitze einführbare und durch Verdrehen um ihre Längsachse in den anderen Schlitz einführbare Drehhülsen ausgebildet sein.

Gemäß einem weiteren Merkmal der Erfindung können an den aneinanderliegenden Verbindungsflanschen zweier Wandelemente Randwulste für den Eingriff mit den starren Klemmhülsen vorgesehen sein, welche als paarweise aufeinander ausgerichtete, zum Rand des jeweiligen Wandelementes parallel verlaufende Randwulste ausgebildet sind, und die geschlitzten, starren Klemmhülsen können als durch Verschieben entlang ihrer Längsachse auf beide Randwulste aufschiebbare Schiebehülsen ausgebildet sein.

Gemäß einem weiteren Merkmal der Erfindung können an den aneinanderliegenden Verbindungsflanschen zweier Wandelemente sich paarweise in die gleiche Richtung verjüngende Randwulste für den Eingriff mit den starren Schiebehülsen vorgesehen sein.

Gemäß einem weiteren Merkmal der Erfindung können die starren Klemmhülsen einen sich verjüngenden Längsschlitz aufweisen.

Gemäß einem weiteren Merkmal der Erfindung kann an jeder starren Klemmhülsen eine nach außen abstehende Handhabe angeordnet sein.

Gemäß einem weiteren Merkmal der Erfindung können die starren Klemmhülsen einen im wesentlichen zylindrischen Querschnitt aufweisen.

Gemäß einem weiteren Merkmal der Erfindung können die starren Klemmhülsen einen spiralförmigen Querschnitt aufweisen.

Gemäß einem weiteren Merkmal der Erfindung können die starren Klemmhülsen eine in ihrer Umfangsrichtung und/oder in ihrer Längsrichtung keilförmig ansteigende Wandstärke aufweisen.

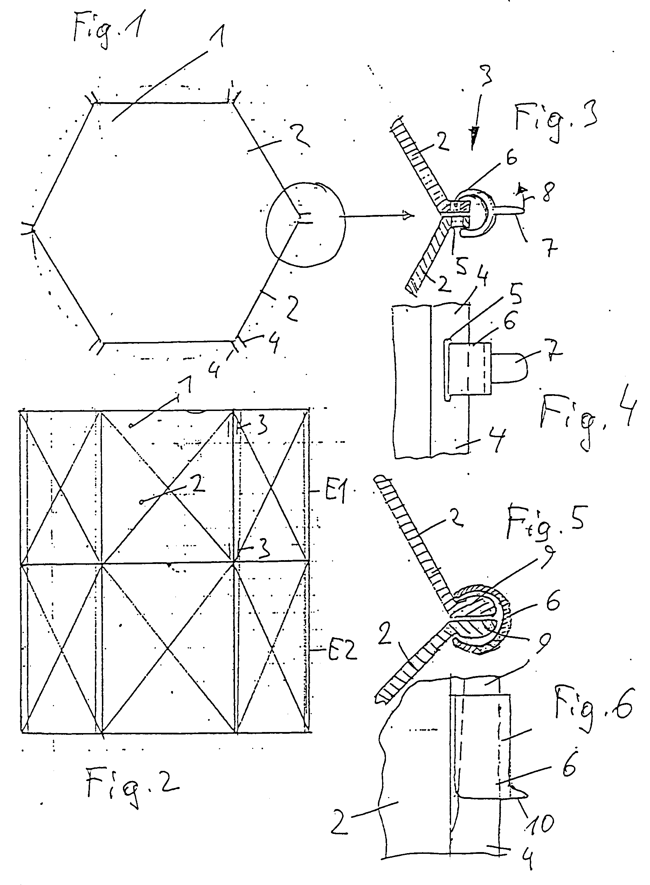

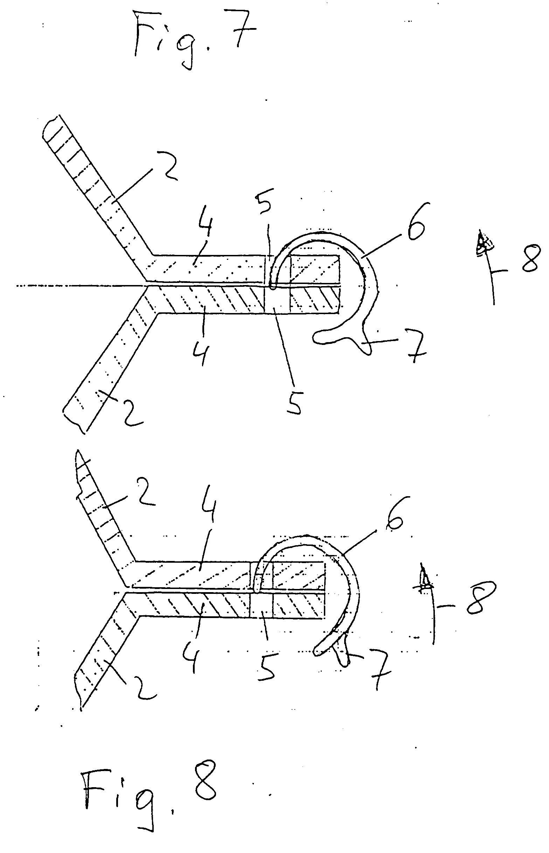

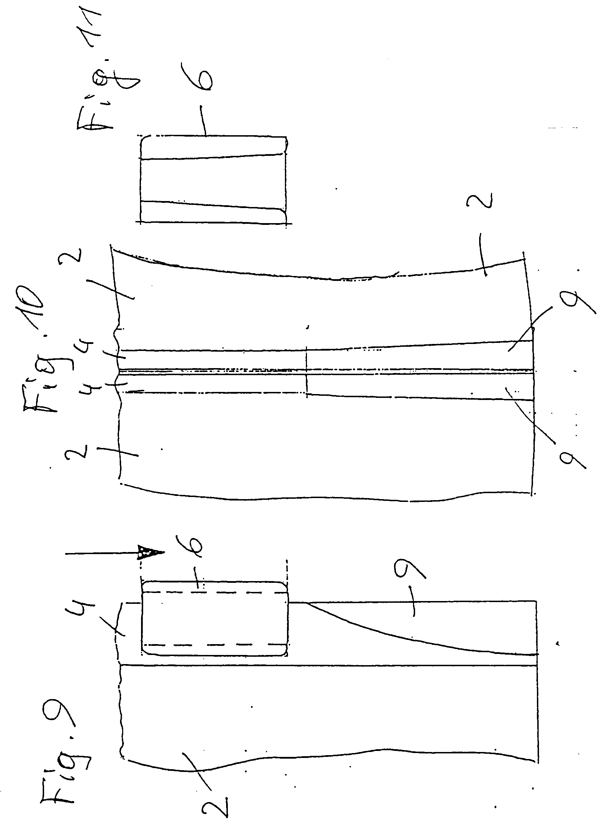

Nachstehend wird die Erfindung anhand von in den Zeichnungen dargestellten Ausführungsbeispielen näher erläutert. In den Zeichnungen zeigen: Fig.1 eine Draufsicht auf einen Kompostsilo, Fig.2 eine Seitenansicht eines Kompostsilos, Fig.3 einen Schnitt durch eine erste Ausführungsform von miteinander verbundenen Randbereichen zweier Wandelemente, Fig.4 eine Draufsicht auf Fig.3, Fig.5 einen Schnitt durch eine zweite Ausführungsform von miteinander verbundenen Randbereichen zweier Wandelemente, Fig.6 einen Schnitt durch eine dritte Ausführungsform von miteinander verbundenen Randbereichen zweier Wandelemente, Fig.7 einen Schnitt durch eine vierte Ausführungsform von miteinander verbundenen Randbereichen zweier Wandelemente, Fig.8 einen Schnitt durch eine fünfte Ausführungsform von miteinander verbundenen Randbereichen zweier Wandelemente, Fig.9 eine Draufsicht auf miteinander verbundene Randbereiche zweier Wandelemente, Fig.10 eine Seitenansicht der Fig.9 und Fig.11 eine Seitenansicht einer Klemmhülse.

Ein erfindungsgemäßer beispielsweise sechseckiger Kompostsilo 1 besteht aus zwölf plattenförmigen Wandelementen 2, die in zwei übereinanderliegenden Etagen E1,E2 angeordnet, jeweils zu sechst zu einem sechseckigen Ring zusammengesetzt und untereinander jeweils paarweise durch zwei lösbare Verbindungsvorrichtungen 3 miteinander verbunden sind. Jedes Wandelement 2 besitzt an seinen, mit einem benachbarten Wandelement 2 zu verbindenden vertikalen bzw. horizontalen Rändern jeweils Verbindungsflansche 4, von denen zumindest ein Teil als Teil der jeweiligen lösbaren Verbindungsvorrichtung 3 ausgebildet ist.

Beim Ausführungsbeispiel der Fig.3 und 4 besteht die Verbindungsvorrichtung 3 aus zwei, in den aneinanderliegenden Verbindungsflanschen 4 zweier benachbarter Wandelemente 2 angeordneten, aufeinander ausgerichteten Schlitzen 5, welche zum Rand des jeweiligen Wandelementes 2 parallel verlaufen, und aus einer einteiligen, geschlitzen, im wesentlichen zylindrischen, starren Klemmhülse 6, die die beiden Verbindungsflansche 4 an ihren äuperen Ränder übergreift und mit einem ihrer Längsränder in einen der Schlitze 5 eingesetzt ist. Diese Klemmhülse 6 ist als starrer Metall- oder Kunststoffteil ausgebildet und besitzt eine, in Umfangsrichtung der Klemmhülse 6 keilförmig stetig ansteigende Wandstärke. Zum Verbinden der beiden Verbindungsflansche 4 wird die Klemmhülse 6, an der von ihr abstehenden Handhabe 7, z.B. einem Betätigungsknebel, erfaßt und in Fig.3 in Richtung des Pfeiles 8 verdreht, sodaß der, in Fig.3 obere Längsrand der Klemm- bzw. Drehhülse 6 nach unten, in den Schlitz 5 des Verbindungsflansches 4 des, in Fig.3 unteren Wandelementes 2 hineinbewegt und die beiden Verbindungsflansche 4 zufolge der Konizität der Klemmhülse 6 bzw. ihrer Wandstärke miteinander verklemmt werden.

In Fig.7 ist eine Verbindungsvorrichtung 3 mit einer zylindrischen Drehhülse 6 mit gleichbleibender Wandstärke als Klemmelement dargestellt und Fig.8 zeigt eine Verbindungsvorrichtung 3 mit einer Drehhülse 6 mit spiralförmigen Querschnitt und gleichbleibender Wandstärke als Klemmelement.

Gemäß einer weiteren Ausführungsform der Verbindungsvorrichtung 3 kann auch eine spiral- oder schneckenförmige Klemmhülse 6 zum Einsatz kommen, bei der der größer werdende Außenradius neben der notwendigen Klemmkraft auch ein gewünschtes Zusammenpressen der beiden miteinander verbundenen Verbindungsflansche 4 führt. Eine derartige Klemmhülse 6 kann noch zusätzlich eine in Umfangsrichtung der Klemmhülse 6 keilförmig stetig ansteigende Wandstärke aufweisen. Auf diese Weise läßt sich ein sehr weiter KLemmbereich für die Klemmhülsen 6 realisieren, der für nicht exakt passende Wandelemente 2 besonders geeignet ist. Derartige Klemmhülsen lassen sich preiswert aus einem extrudierten Metall- oder Kunststoffprofil herstellen.

Bei den Ausführungsformen der Verbindungsvorrichtungen 3 gemäß den Fig.5 und 6 bzw. 9 bis 11 sind die aneinanderliegenden Verbindungsflansche 4 der Wandelemente 2 mit aufeinander ausgerichteten, zum Rand des jeweiligen Wandelementes 2 parallel verlaufenden Randwulsten 9 versehen, die im Querschnitt im wesentlichen halbrund ausgebildet sind und sich in die gleiche Richtung verjüngen. Auf dies beiden Randwulste 9 ist eine einteilige, starre, geschlitze Klemmhülse 6 in Längsrichtung der Randwulste 9 aufgeschoben. Auch bei diesen Schiebehülsen 6 ergibt die keilförmige Ausbildung des Längsschlitzes der Hülse (Fig.11) und der konische Anstieg der Randwulste 9 in deren Längsrichtung einen großen Verstellbereich der Verbindungsvorrichtungen 3 für ungenau passende Wandelemente. Zum leichteren Lösen der durch die Schiebehülsen erzielten Verklemmung der Verbindungsflansche 4 sind an den Enden der Schiebehülsen Handhaben oder radial abstehende Fortsätze 10 angebracht.

Mit den erfindungsgemäßen Klemmhülsen bzw. Schiebe- oder Drehhülsen lassen sich die einzelnen Wandelemente sowohl horizontal als auch vertikal einfach und formstabil fixieren, wobei jeweils nur zwei Klemmhülsen pro zu verbindenden Randbereich erforderlich sind.

## Patentansprüche

1. Mehrteiliger Kompostsilo, der aus mehreren, vorzugsweise plattenförmigen Wandelementen zusammengesetzt ist, die an ihren aneinanderstopenden Randbereichen mit Verbindungsflanschen versehen und mittels lösbarer Verbindungsvorrichtungen untereinander verbunden sind, dadurch gekennzeichnet, daß die Verbindungsvorrichtungen (3) als geschlitzte, einteilige und starre Klemmhülsen (6) ausgebildet sind, daß jede starre Klemmhülse (6) auf die aneinanderliegenden Verbindungsflansche (4) zweier Wandelemente (2) aufsetzbar ist und daß jede starre Klemmhülse (6) durch Verdrehen um ihre Längsachse oder Verschieben entlang ihrer Längsachse mit beiden Verbindungsflanschen (4) in einen formschlüssigen Eingriff bringbar und an beiden Verbindungsflanschen (4) festklemmbar ist.

2. Kompostsilo nach Anspruch 1, dadurch gekennzeichnet, daß in den aneinanderliegenden Verbindungsflanschen (4) zweier Wandelemente (2) Durchtrittsöffnungen für den Eingriff mit den starren Klemmhülsen (6) vorgesehen sind, welche als paarweise aufeinander ausgerichtete, zum Rand des jeweiligen Wandelementes (2) parallel ve rlaufende Schlitze (5) ausgebildet sind, und daß die geschlitzten, starren Klemmhülsen (6) als, in einen der aufeinander ausgerichteten Schlitze (5) einführbare und durch Verdrehen um ihre Längsachse in den anderen Schlitz (5) einführbare Drehhülsen ausgebildet sind.

3. Kompostsilo nach Anspruch 1, dadurch gekennzeichnet, daß an den aneinanderliegenden Verbindungsflanschen (4) zweier Wandelemente (2) Randwulste (9) für den Eingriff mit den starren Klemmhülsen (6) vorgesehen sind, welche als paarweise aufeinander ausgerichtete, zum Rand des jeweiligen Wandelementes (2) parallel verlaufende Randwulste (9) ausgebildet sind, und daß die geschlitzten, starren Klemmhülsen (6) als durch Verschieben entlang ihrer Längsachse auf beide Randwulste (9) aufschiebbare Schiebehülsen ausgebildet sind.

4. Kompostsilo nach Anspruch 3, dadurch gekennzeichnet, daß an den aneinanderliegenden Verbindungsflanschen (4) zweier Wandelemente (2) sich paarweise in die gleiche Richtung verjüngende Randwulste (9) für den Eingriff mit den starren Schiebehülsen (6) vorgesehen sind.

5. Kompostsilo nach einem der Ansprüche 1 bis 4, dadurch gekennzeichnet, daß die starren Klemmhülsen (6) einen sich verjüngenden Längsschlitz aufweisen.

6. Kompostsilo nach einem der Ansprüche 1 bis 5, dadurch gekennzeichnet, daß an jeder starren Klemmhülsen (6) eine nach außen abstehende Handhabe (7,10) angeordnet ist.

7. Kompostsilo nach einem der Ansprüche 1 bis 6, dadurch gekennzeichnet, daß die starren Klemmhülsen (6) einen im wesentlichen zylindrischen Querschnitt aufweisen.

8. Kompostsilo nach einem der Ansprüche 1 bis 6, dadurch gekennzeichnet, daß die starren Klemmhülsen (6) einen spiralförmigen Querschnitt aufweisen.

9. Kompostsilo nach einem der Ansprüche 1 bis 8, dadurch gekennzeichnet, daß die starren Klemmhülsen (6) eine in ihrer Umfangsrichtung und/oder in ihrer Längsrichtung keilförmig ansteigende Wandstärke aufweisen.

## Claims

1. Multi-part compost silo comprising a plurality of preferably plate-shaped wall elements which are provided at their abutting edge areas with connecting flanges and connected to one another by means of detachable connecting devices, characterised in that the connecting devices (3) are formed as slotted, one-piece, rigid clamping sleeves (6), in that each rigid clamping sleeve (6) can be slid onto the abutting connecting flanges (4) of two wall elements (2), and in that each rigid clamping sleeve (6) can be brought into positive interlocking engagement with both connecting flanges (4) by rotating it about its longitudinal axis or displacing it along its longitudinal axis and can be clamped firmly to both connecting flanges (4).

2. Compost silo according to claim 1, characterised in that in the abutting connecting flanges (4) of two wall elements (2) through-openings are provided for the engagement with the rigid clamping sleeves (6), the openings being formed as paired slots (5) aligned with one another and running parallel to the edge of the respective wall element (2), and in that the slotted, rigid clamping sleeves (6) are formed as rotatable sleeves which can be inserted into one of the aligned slots (5) and by rotating them about their longitudinal axis into the other slot (5).

3. Compost silo according to claim 1, characterised in that at the abutting connecting flanges (4) of two wall elements (2) edge beads (9) are provided for engagement with the rigid clamping sleeves (6), the edge beads being formed as paired edge beads (9) aligned with one another and running parallel to the edge of the respective wall element (2), and in that the slotted, rigid clamping sleeves (6) are formed as sliding sleeves which by displacing them along their longitudinal axis can be slid on to both edge beads (9).

4. Compost silo according to claim 3, characterised in that, at the abutting connecting flanges (4) of two wall elements (2), pairs of edge beads (9) tapering in the same direction are provided for engagement with the rigid sliding sleeves (6).

5. Compost silo according to one of claims 1 to 4, characterised in that the rigid clamping sleeves (6) have a tapering longitudinal slot.

6. Compost silo according to one of claims 1 to 5, characterised in that an outwardly projecting grip (7, 10) is arranged on each rigid clamping sleeve (6).

7. Compost silo according to one of claims 1 to 6, characterised in that the rigid clamping sleeves (6) have an essentially cylindrical cross-section.

8. Compost silo according to one of claims 1 to 6, characterised in that the rigid sleeves (6) have a helical cross-section

9. Compost silo according to one of claims 1 to 8, characterised in that the rigid clamping sleeves (6) have a wall thickness increasing in a wedge shape in their circumferential and/or their longitudinal direction.

## Revendications

1. Silo de compostage en plusieurs parties, composé de plusieurs éléments de paroi, de préférence en forme de plaques, qui dans leurs zones de bords mutuellement accolées sont munis de brides de raccordement et sont reliés les uns aux autres au moyen de dispositifs de raccordement démontables, caractérisé en ce que les dispositifs de raccordement (3) sont constitués sous la forme de manchons de serrage (6) fendus, rigides et monoblocs, en ce que chaque manchon de serrage rigide (6) peut être monté sur les brides de raccordement adjacentes (4) de deux éléments de paroi (2), et en ce que par rotation autour de son axe longitudinal ou translation le long de son axe longitudinal chaque manchon de serrage rigide (6) peut être amené en prise de verrouillage positif avec les deux brides de raccordement (4), et être bloqué sur les deux brides de raccordement (4).

2. Silo de compostage selon la revendication 1, caractérisé en ce qu'il est prévu dans les deux brides de raccordement adjacentes (4) de deux éléments de paroi (2), pour la prise avec le manchon de serrage rigide (6), des ouvertures traversantes qui sont réalisées sous la forme de fentes (5) alignées l'une sur l'autre par paires, s'étendant parallèlement au bord de l'élément de paroi respectif (2), et en ce que les manchons de serrage rigides, fendus (6) sont réalisés sous la forme de manchons rotatifs pouvant être introduits dans l'une des fentes (5) alignées l'une sur l'autre et, par rotation autour de son axe, dans l'autre fente (5).

3. Silo de compostage selon la revendication 1, caractérisé en ce qu'il est prévu sur les deux brides de raccordement adjacentes (4) de deux éléments de paroi (2), pour la prise avec les manchons de serrage rigides (6), des bourrelets de bord (9) qui sont réalisés sous la forme de bourrelets de bord (9) alignés l'un sur l'autre par paires, s'étendant parallèlement au bord de l'élément de paroi respectif (2) et en ce que les manchons de serrage rigides, fendus (6) sont réalisés sous la forme de manchons coulissants pouvant par translation selon leur axe longitudinal être enfilés sur les deux bourrelets de bord (9).

4. Silo de compostage selon la revendication 3, caractérisé en ce qu'il est prévu sur les deux brides de raccordement adjacentes (4) de deux éléments de paroi (2), des bourrelets de bord (9) qui se rétrécissent par paires dans la même direction pour la prise avec les manchons coulissants rigides (6).

5. Silo de compostage selon l'une des revendications 1 à 4, caractérisé en ce que les manchons de serrage rigides (6) présentent une fente longitudinale se rétrécissant.

6. Silo de compostage selon l'une des revendications 1 à 5, caractérisé en ce qu'un organe de manipulation (7, 10) saillant vers l'extérieur est agencé sur chaque manchon de serrage rigide (6).

7. Silo de compostage selon l'une des revendications 1 à 6, caractérisé en ce que les manchons de serrage rigides (6) présentent une section transversale sensiblement cylindrique.

8. Silo de compostage selon l'une des revendications 1 à 6, caractérisé en ce que les manchons de serrage rigides (6) présentent une section transversale en forme de spirale.

9. Silo de compostage selon l'une des revendications 1 à 8, caractérisé en ce que les manchons de serrage rigides (6) présentent une épaisseur de paroi qui croit en forme de coin dans leur direction circonférentielle et/ou dans leur direction longitudinale.
